# EUROPEAN PATENT APPLICATION

(11) **EP 2 662 053 A1**
(43) Date of publication of application: **13.11.2013**
(21) Application number: 12167427.9
(22) Date of filing: 10.05.2012
(51) Int. Cl.: A61C 17/00

(54) **Separation device**

(71) Applicant: Dental Recycling Services B.V., 9636 DB Zuidbroek (NL)
(72) Inventor: Steger, Alphonsus Jacobus Maria Franciscus, 1017 KP Amsterdam (NL)
(74) Representative: 't Jong, Bastiaan Jacob

(57) **Abstract**

The invention relates to a device for separating particles, in particular amalgam, from a fluid, which device comprises:
- a housing with an inlet opening and an outlet opening; and
- a sedimentation body having a plurality of channels extending between the inlet opening and the outlet opening, each channel is provided with a plurality of barrier elements for providing sedimentation zones in the channel.

## Description

The invention relates to a device for separating particles, in particular amalgam, from a fluid, which device comprises:
- a housing with an inlet opening and an outlet opening; and
- a sedimentation body having a plurality of channels extending between the inlet opening and the outlet opening.

Such a device is for example known from EP 0979132. In this device according to the prior art, a fluid containing particles like amalgam flows through a first settling chamber for the larger particles to settle. Then the fluid is fed to a chamber having a number of parallel plates. The plates are spaced apart such that a laminar flow is achieved. Each plate is provided with small protrusions which provide settling zones. The small particles in the fluid will settle around the protrusions.

After a period of use, the device is disassembled and the plates are taken apart to have them cleaned. After cleaning, the device is assembled again and ready for use.

A disadvantage of a plate type sedimentation device is that after a while, the flow along the plates can be influenced by the sediments and could even result in turbulence, which reduces the effectiveness of the device.

Is is an object of the invention to provide an alternative for the prior art device according to the invention, in which the sedimentation is similar or even better.

This object is achieved with a device according to the preamble, which device is **characterized in that** each channel is provided with a plurality of barrier elements for providing sedimentation zones in the channel.

By directing the fluid through the plurality of channels a laminar flow will be obtained in each channel. The barrier elements present in the channels provide zones at which sediments can settle caused by gravitation.

An advantage of the plurality of channels is that any disturbance in one of the channels has no influence on the laminar flow in the other channels. So, if sediments in one channel would cause a turbulent flow, this will have no effect on the flow in the other channels.

In a preferred embodiment of the device according to the invention the barrier elements are undulations in the channel wall.

The undulations in the channel function similar to dunes and cause the particles to settle downstream of the undulation.

In another preferred embodiment of the device according to the invention the sedimentation body is cylindrical and the channels are substantially circular.

The resulting embodiment provides a compact design with equal characteristics as an elongate version, in which the channels are arranged in a straight line.

In still another preferred embodiment of the device according to the invention the undulations are arranged in the radial outer part of the channel wall.

In another embodiment of the device according to the invention the sedimentation body is divided in interconnected body parts.

With this embodiment the sedimentation body can be taken apart by disconnecting the body parts. This simplifies cleaning of the sedimentation body.

In a further preferred embodiment of the device according to the invention the sedimentation body is divided in at least two body parts, wherein the at lease two body parts are connected by dove-tail joints.

With this embodiment the two body parts can be slid together by combining the dovetail joint parts. As a result a simple and correct alignment is achieved in which the plurality of channels of the first body part are aligned with the plurality of channels of the second body part.

In yet another embodiment of the device according to the invention the sedimentation body is manufactured by stereo lithography.

With stereo lithography it is possible to build complex structures, which would otherwise be extremely difficult to make and would give extreme high costs. With stereo lithography it is relatively easy to make a sedimentation body with circular channels and in which undulations are provided on the inner wall of the channels.

Another unexpected advantage of stereo lithography is the rough surface, which typically is created with this technique. The rough surface enhances the sedimentation, because the particles can more easily stick to the wall of the channels.

In still a further embodiment of the device according to the invention the housing is provided with a pre-settling chamber arranged between the inlet opening of the housing and the sedimentation body.

The pre-settling chamber enables large particles to settle in this pre-settling chamber, such that only small particles are fed to the plurality of channels. This reduces the change on a clogged sedimentation body.

These and other features of the invention will be elucidated in conjunction with the accompanying drawings.
Figure 1 shows a perspective view with cutout parts of an embodiment of the invention.
Figure 2 shows a cross sectional side view of part of the sedimentation body of the device of figure 1.
Figure 3 shows a cross sectional top view of the sedimentation body of figure 1.
Figure 4 shows a cross sectional view of a second embodiment of the invention.
Figure 5 shows an exploded view of parts of the embodiment of figure 4.

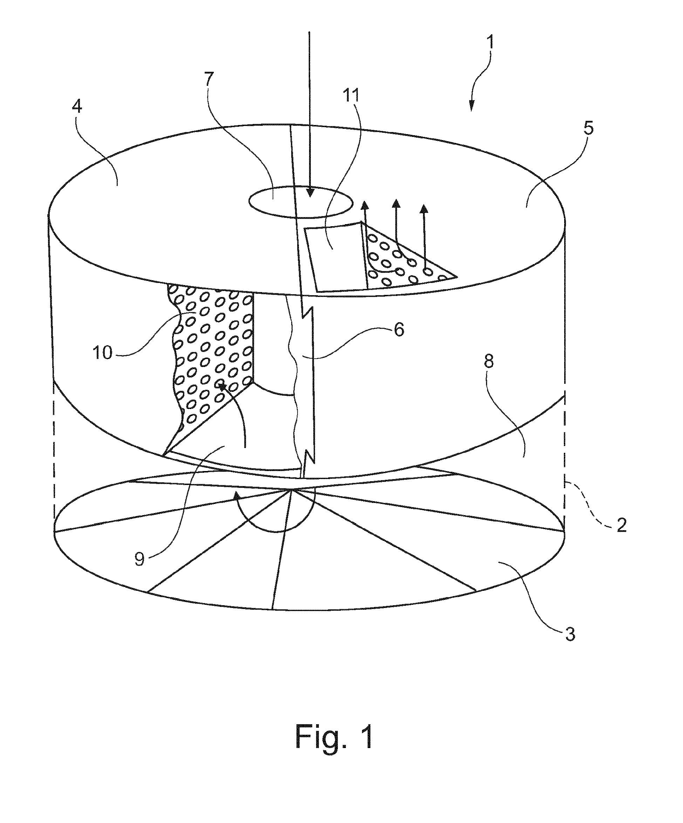

Figure 1 shows an embodiment of a device 1 according to the invention. For clarity the housing 2 is only shown partially, and in particular the cone shaped bottom 3 is shown.

Inside the housing 2 a sedimentation body 4, 5 is provided. This sedimentation body 4, 5 consists out of two body parts 4 and 5, which are connected to each other by a dovetail joint 6.

A central passage 7 is formed at the center of the sedimentation body 4, 5. Through this central passage 7 a fluid with particles is fed to the pre-settling chamber 8, defined by the housing 2, bottom 3 and sedimentation body 4, 5. In this pre-settling chamber 8 large particles can settle on the bottom 3.

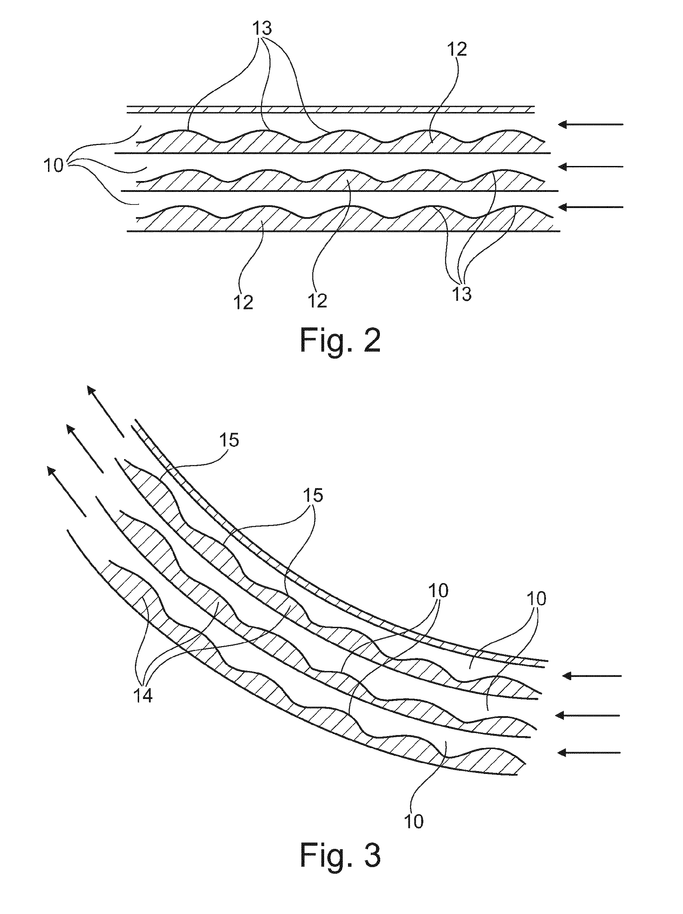

The fluid then flows from the pre-settling chamber 8 to the inlet opening 9 of the sedimentation body 4. At the inlet opening 9 the flow is divided to enter the plurality of channels 10. Inside these channels 10 the particles of the fluid may settle, which will be explained further in conjunction with figures 2 and 3.

The fluid exits the channels 10 at the outlet opening 11 in the sedimentation body part 5. The housing 2, which is only partly shown, is designed to divide the inlet flow entering the central passage 7 and the flow exiting the outlet opening 11.

Figure 2 shows a cross sectional side view of the channels 10. As is clear from this figure, the bottom 12 of each channel 10 is provided with an undulation shape. This results in dune like barriers 13, behind which particles from the flow may settle. This settling is mainly caused by gravity.

Figure 3 shows a cross sectional top view of the channels 10. It is clear that also the radial outer wall 14 of the channels 10 is provided with an undulating surface. Due to the centrifugal force particles in the flow are urged to the radial outer wall 14, such that the particles may also settle behind the dunes 15 of the radial outer wall 14.

In addition to the shown undulations of this embodiment 1, also the radial inner wall and / or the top wall of a channel 10 could be provided with an undulating surface. When the channel wall is sufficiently rough particles could adhere on any part of the channel wall.

Although the embodiment shown has concentric and parallel channels 10, it is also possible, in particular with the stereo lithography manufacturing method, to have different shaped channels, for example helix shaped channels.

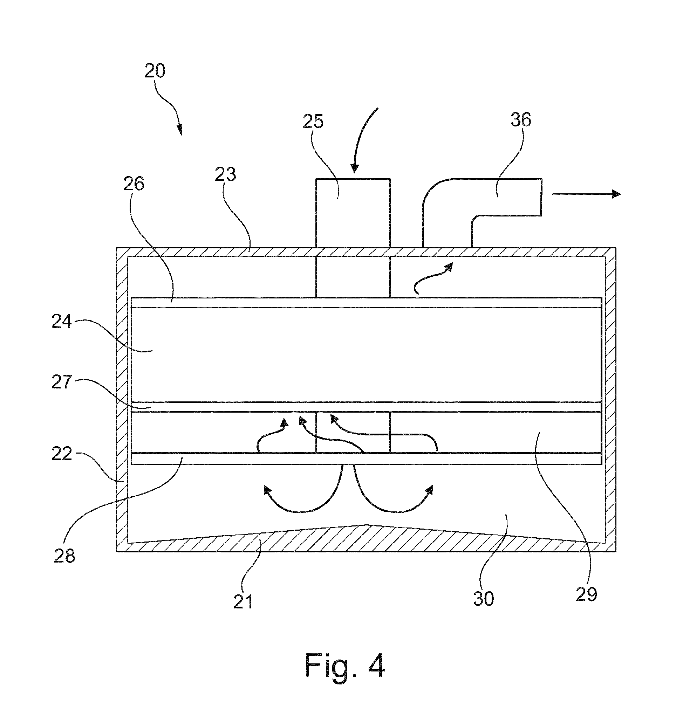

Figure 4 shows a cross sectional view of a second embodiment of a device 20 according to the invention. The embodiment 20 has a bottom 21 with a peripheral wall 22 and a top 23, to provide an enclosure.

A sedimentation body 24, similar to the sedimentation body 4, 5 of figure 1, is arranged inside the enclosure 21, 22, 23. The body 24 is provided with a central passage, through which a feed pipe 25 extends. The body 24 is closed off on both sides by plates 26, 27.

A third plate 28 is arranged at a distance of the plate 27 such that a second pre-settling chamber 29 is created.

Fluid running through the feed pipe 25 will first enter a first chamber 30, in which heavy particles may settle. Then the fluid is fed to the second pre-settling chamber 29 in which smaller particles can settle. Finally the fluid runs through the sedimentation body 24 for further settling of particles.

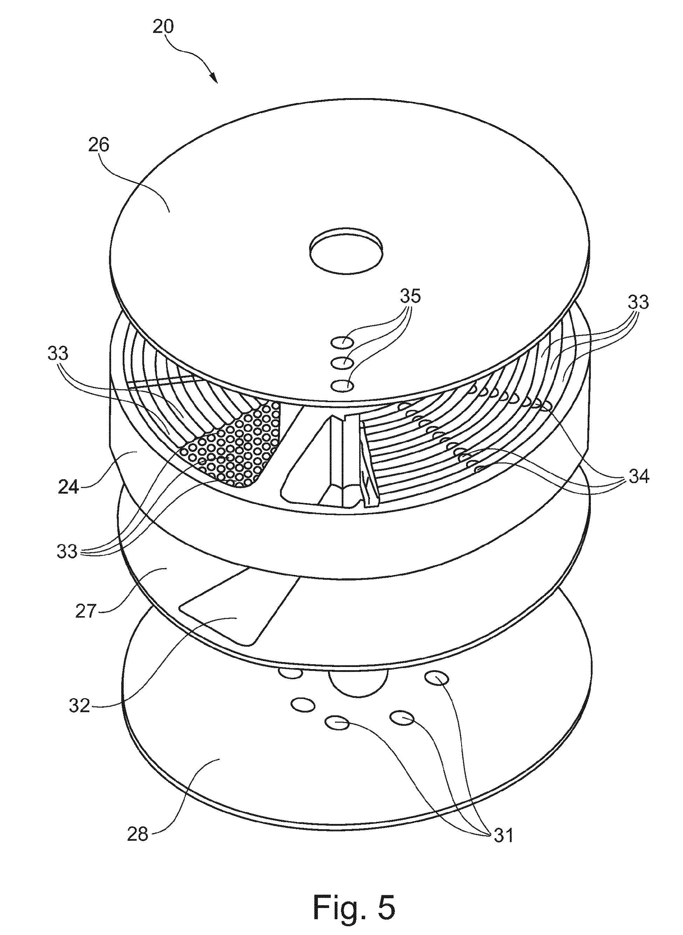

Figure 5 shows an exploded view of the device 20 of figure 4. From this figure 5 it is clear that the third plate 28 is provided with a number of holes 31, which restrict the flow of the fluid and also ensure that the flow within the second pre-settling chamber 29 is such that particles can settle.

The plate 27 is provided with a large opening 32 such that the fluid can flow unrestricted from the second pre-settling chamber 29 into the plurality of channels 33. As can be seen from figure 5, a number of barrier elements 34 are arranged in the channels 33 to improve the settling of particles.

The top plate 26 closes the sedimentation body 24 and is provided with a number of outlet openings 35 for discharging fluid from the device 20 in to the outlet 36 (see figure 4).

The dimensions of the holes 31 in plate 28 and the holes 35 in plate 26 are chosen such that an optimal sedimentation of particles within the device 20 is obtained.

## Claims

1. Device for separating particles, in particular amalgam, from a fluid, which device comprises:
- a housing with an inlet opening and an outlet opening; and
- a sedimentation body having a plurality of channels extending between the inlet opening and the outlet opening, **characterized in that**
each channel is provided with a plurality of barrier elements for providing sedimentation zones in the channel.

2. Device according to claim 1, wherein the barrier elements are undulations in the channel wall.

3. Device according to claim 1 or 2, wherein the sedimentation body is cylindrical and the channels are substantially circular.

4. Device according to claim 2 and 3, wherein the undulations are arranged in the radial outer part of the channel wall.

5. Device according to any of the preceding claims, wherein the barrier elements are arranged at the bottom of the channel wall, when viewed in gravitational direction.

6. Device according to any of the preceding claims, wherein the sedimentation body is divided in interconnected body parts.

7. Device according to claim 6, wherein the sedimentation body is divided in at least two body parts, wherein the at lease two body parts are connected by dove-tail joints.

8. Device according to any of the preceding claims, wherein the sedimentation body is manufactured by stereo lithography.

9. Device according to any of the preceding claims, wherein the housing is provided with a pre-settling chamber arranged between the inlet opening of the housing and the sedimentation body.
